Europäisches Patentamt

European Patent Office

Office européen des brevets

(19)

(11) Veröffentlichungsnummer: **0 278 398 B1**

(12) **EUROPÄISCHE PATENTSCHRIFT**

(45) Veröffentlichungstag der Patentschrift: 04.09.91

(51) Int. Cl.5: **B29C 45/16**

(21) Anmeldenummer: **88101613.3**

(22) Anmeldetag: **04.02.88**

(54) **Verfahren zur Herstellung eines gasdichten Kunststoffverschlusses für Flaschen und dergleichen Behältnisse.**

(30) Priorität: **06.02.87 DE 3703680**

(43) Veröffentlichungstag der Anmeldung:
**17.08.88 Patentblatt 88/33**

(45) Bekanntmachung des Hinweises auf die
Patenterteilung:
**04.09.91 Patentblatt 91/36**

(84) Benannte Vertragsstaaten:
**AT BE CH DE ES FR GB GR IT LI LU NL SE**

(56) Entgegenhaltungen:
EP-A- 0 051 568      EP-A- 0 174 029
CA-A- 1 211 605      FR-A- 1 503 998
FR-A- 2 593 148      US-A- 3 809 733
US-A- 4 308 965

(73) Patentinhaber: **Schellenbach, Frank
Lindenstrasse 17
W-7261 Gechingen(DE)**

(72) Erfinder: **Schellenbach, Frank
Lindenstrasse 17
W-7261 Gechingen(DE)**

(74) Vertreter: **Frohwitter, Bernhard, Dipl.-Ing. et al
Bardehle-Pagenberg-Dost-Altenburg
Frohwitter-Geissler & Partner Galileiplatz 1
Postfach 86 06 20
W-8000 München 86(DE)**

## Beschreibung

Die Erfindung betrifft ein Verfahren zur Herstellung eines gasdichten Kunststoffverschlusses für Flaschen entsprechend dem Oberbegriff des Anspruchs 1.

Die Getränkeindustrie ist Massenverbraucher von Flaschenverschlüssen. Solche Verschlüsse, z. B. für Mineralwasser-, Fruchtsaftflaschen usw. werden allein in Deutschland pro Jahr zu hunderten von Millionen verbraucht.

Zumeist handelt es sich um Verschlüsse aus Aluminium oder auch aus Kunststoff welche nach Art einer Kappe ausgebildet sind und durch ein Innengewinde als Schraubverschlüsse dienen können. Neben Schraubverschlüssen werden Kappenverschlüsse auch ganz anderer Art verwendet, z. B. solche, welche auf den Flaschenhals aufgeklemmt werden. Die Erfindung bezieht sich auf jedwede Art von Flaschenverschlüssen.

Eines der großen und bislang nur unbefriedigend gelösten Probleme bei Kunststoffverschlüssen ist das des Dichtens zwischen dem Verschluß und der Flasche. Der Verschluß muß gegenüber Umweltbelastungen wie z. B. Stößen, ungewollter Beaufschlagung mit Kräften aus allen Richtungen,fertigwerden, gegenüber dem in der Flasche eingeschlossenen Medium sowohl chemisch als auch physikalisch unempfindlich sein und schließlich das Medium daran hindern, bei aufgebrachtem Verschluß die Flasche verlassen zu können. Unter einem solchen Verlassen der Flasche ist sowohl Diffusion als auch Flüssigkeitsentweichen zwischen Verschluß und Flasche und auch das Ausgasen der Flüssigkeit im Verschlußbereich gemeint.

Desweiteren ist die Forderung gestellt, daß der Kunststoffverschluß mit erheblichen Mündungstoleranzen und Unebenheiten im Mündungsbereich fertigwerden muß.

Ein weiterer großer Problemkreis dem sich solche Verschlüsse ausgesetzt sehen, ist das der Belastung der Umwelt durch die Existenz der Verschlüsse. Allein die Tatsache, daß hunderte von Millionen jährlich gebraucht werden, wobei es sich im Grunde um einen Wegwerfartikel handelt, zeigt auf, daß sowohl in der Herstellung des Verschlusses als auch nach Abschluß der Verwendung als Verschluß eine die Umwelt nicht belastende Situation angestrebt werden muß, so etwa hinsichtlich des verwendeten Materials und der erforderlichen Energieaufwendung für den Herstellungsprozeß. Schließlich ist auch anzustreben, den Verschluß auch dann nicht zur Umweltbelastung werden zu lassen, wenn er nach Verbrauch keiner geordneten Verwertung zugeführt wird, sondern durch Unachtsamkeit oder wie auch immer in der Umwelt verbleibt.

Diesen nur als äußerst widersprüchlich zu bezeichnenden Bedingungen genügt bislang keiner der bekannten Verschlüsse. So können zwar die bekannten Aluminiumschraubverschlüsse dem ersten Problemkreis voll gerecht werden, in Herstellung, Energieaufwand und Entsorgung bezüglich des heutigen Umweltverständnisses sind metallische Verschlüsse aber generell von allergrößter Problematik. Dies gilt ganz besonders für Aluminiumverschlüsse, deren Recycling vielen bekannten Problemen ausgesetzt ist.

Kunststoffverschlüsse können beispielsweise aus umweltfreundlichen Materialien bestehen, die leicht in Recycling-Verfahren aufbereitet werden können.

Die Herstellung solcher Verschlüsse ist problematisch, da sie entweder nicht in der Lage sind, die geforderte Gasdichtigkeit bereitzustellen, oder aber eine zusätzliche Dichtung eingebracht werden muß, welches sowohl Herstellungs- als auch Haltbarkeits- als auch Recyclingprobleme aufwirft. Aus herstellungstechnischen Gründen wird nämlich zumeist für die Dichtung ein anderes Material gewählt, so daß für ein vernünftiges Recycling diese beiden Stoffe umständlich erst wieder getrennt werden müssen.

Aus der kanadischen Patentschrift CA 1 211 605 ist ein Verfahren zur Herstellung eines gasdichten Kunststoffverschlusses für Flaschen unter Verwendung des Zwei-Stoffe-Spritzgießens bekannt, wie es im Oberbegriff des Patentanspruchs 1 vorausgesetzt ist. Das bekannte Verfahren offenbart das Spritzgießen unterschiedlicher Teile eines Kunststoffverschlusses (insbesondere der Dichtung und des äußeren Verschlußkörpers) mit unterschiedlich harten Kunststoffen ohne Wechsel der Gußform. Dabei wird zunächst die Dichtungsschicht aus dem weicheren Material gespritzt. Anschließend wird der Spritzkern zusammen mit der durch Schrumpfung an ihm haftenden Dichtungsschicht aus dem Formnest zurückgezogen und gibt so einen zweiten Hohlraum mit der Form des Verschlußkörpers frei. Daraufhin spritzt eine zweite Düse den zweiten, härteren Kunststoff ein. Zum Schluß wird der Spritzkern mit dem fertiggespritztem Zwei-Komponenten-Verschluß aus dem Formnest herausgenommen und es wird der Verschluß vom Spritzkern abgeschraubt.

Die bekannte Lösung hat den Nachteil, daß zunächst der weichere Dichtungsteil gegossen wird und dieser dann am Spritzkern haften muß, um die Öffnung der zweiten Gußform erreichen zu können. Dies schränkt die Formgebung der Dichtungsfläche ein, die später an den Flaschenhals liegen kommt. Das bekannte Verfahren erfordert Hinterschneidungen im Bereich der Dichtwulste, damit sich die Dichtungsschicht nicht vorzeitig vom Spritzkern ablöst.

Die Erfindung steht deshalb vor der Aufgabe, die Reihenfolge der Verfahrensschritte sowie die Position und Richtung der Einspritzdüsen möglichst zweckmäßig festzulegen.

Zur Lösung der aufgezeigten problematischen Situation sieht die Erfindung ein Verfahren zur Herstellung eines gasdichten Kunststoffverschlusses für Flaschen und dgl. Behältnisse vor, welches durch die Merkmale des Anspruchs 1 umrissen ist. Insbesondere wird der erste Stoff in die Trennebene eingespritzt.

Eine Ausbildung des Verfahrens sieht nach dem Anspruch 2 vor, daß der zweite Stoff durch die Verschlußmitte eingespritzt wird.

Schließlich werden nach dem Anspruch 3 des erfindungsgemäßen Verfahrens Stoffe vorgezogen, bei denen der erste - also die eigentliche Verschlußkappe bildende-Stoff Hartpolyethylen ist und der zweite, die Flachdichtung bildende Stoff Weich-Polyethylen ist.

Mit Hilfe dieses Verfahrens wird es auf verblüffend einfache Weise möglich, die bisher bestehende Problematik des Herstellens von Kunststoffverschlüssen, in die sowohl eine ausgezeichnet funktionierende Dichtung eingebracht ist, als auch umweltfreundliches Recycling möglich ist, bereitzustellen. Es sind zwar Kunststoffverschlüsse bekannt, welche eine gesonderte Dichtung aufweisen. Der durch das erfindungsgemäße Verfahren hergestellte Verschluß unterscheidet sich aber von den Verschlüssen nach dem Stand der Technik gerade dadurch, daß aufgrund des Herstellungsverfahrens Verschluß und Flachdichtung eine körperliche Einheit bilden, obwohl beide Verschlußbereiche ganz unterschiedliche chemische und physikalische Eigenschaften aufweisen.

Der erfindungsgemäß hergestellte Verschluß weist also sowohl alle physikalischen Eigenschaften auf, die ein solcher Verschluß gegenüber der Außenwelt haben muß, genannt sei nur die Stoßunempfindlichkeit und die relative Unverletzlichkeit, er hat aber auch gegenüber dem Flascheninhalt ausgezeichnete, dichtende Qualitäten wegen der gezielt ausgewählten Eigenschaften des zweiten Stoffes.

Damit wird dem Fachmann eine weite Möglichkeit der Kombination von Kunststoffen eröffnet, er kann also ganz nach den Anforderungen der speziellen Aufgabe Kunststoffe auswählen, deren chemische und thermische Verträglichkeit, deren mechanische Eigenschaften und deren Verarbeitungsbedingungen aufeinander abgestimmt sind und die gemeinsam, also ohne umständliches Trennen dem Recycling zuführbar sind.

Ein weiterer Vorteil der Erfindung liegt auch darin, daß durch das Zwei-Stoffe-Spritzen, beispielsweise bei Verwendung von zweiten Stoffen wie Weichpolyethylen genauestens auf die Kontur der zu verschließenden Flasche abgestellt werden kann. Man kann diesem Vorteil auch anders wenden, in dem man sagt, daß an die Flaschenhalskontur keine großen Anforderungen mehr gestellt werden müssen hinsichtlich ihrer Formgenauigkeit, da eine solche Flachdichtung erzeugt werden kann, daß die etwa vorhandenen Formungenauigkeiten nicht ins Gewicht fallen. Hingewiesen sei nur darauf, daß das Weichpolyethylen auch Radien u. dgl. vollkommen ausfüllt und damit eine absolut gasdichte Verschließbarkeit garantiert.

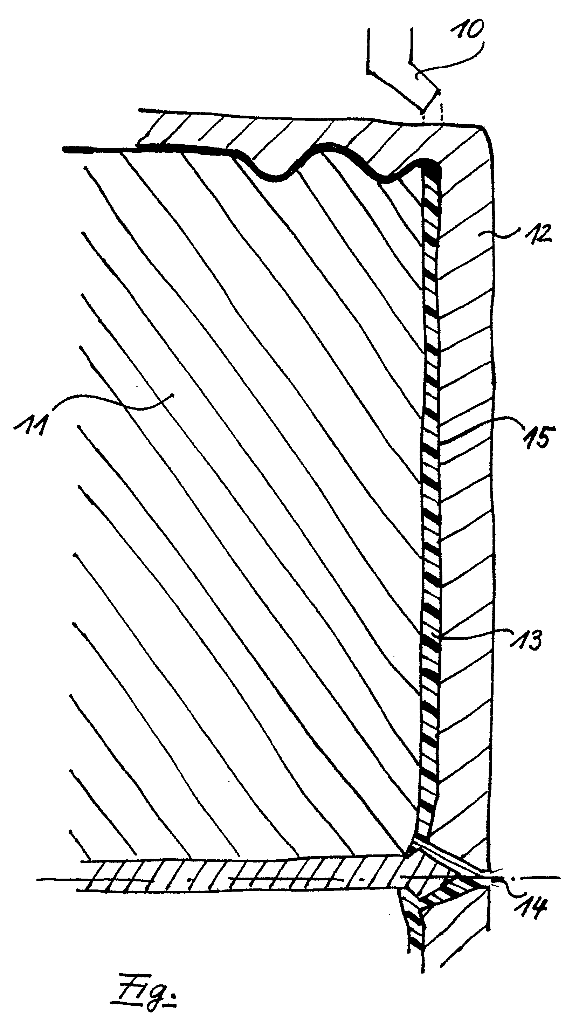

Die Erfindung ist anhand der einzigen Zeichnung näher erläutert.

Diese Zeichnung zeigt im Viertelschnitt einen Verschluß 12 welcher unter erfindungsgerechtem Einsatz des Zwei-Stoffe-Spritzgießens hergestellt worden ist, sich aber noch vor der Ausformung aus der Maschine befindet.

Es sei erwähnt, daß das auch als Zwei-Farben-Spritzgießen bekannte Verfahren längst Eingang in die Fachwelt gefunden hat, so daß dieses als vollständig bekannt vorausgesetzt werden darf. Gleichwohl sei der Hinweis aufgenommen, daß einschlägige Veröffentlichungen, insbesondere aber auch geeignete Maschinen als Serienmaschinen sich im Markt befinden. Die vorhandenen öffentlich zugänglichen Erkenntnisse zum Zwei-Farben-Spritzgießen werden vollinhaltlich in Bezug genommen.

Für den Zweck des Verständnisses dieser Erfindung reicht es aus auf folgendes einzugehen. Bei dem verwendeten Zwei-Stoffe-Spritzgießen ist die Maschine - wie üblich beim Zwei-Farben-Spritzgießen,mit zwei Spritzeinheiten ausgerüstet. Das Werkzeug hat zwei Stationen, eine zum Vorspritzen und eine zum Fertigspritzen. Die bei einer Zwei-Farben Spritzmaschine verwendete Anordnung, bei der die eine Spritzeinheit horizontal liegt und zentral durch die feste Werkzeugplatte einspritzt und die andere Spritzeinheit vertikal angeordnet ist und das Einspritzen des zweiten Stoffes in die Werkzeugtrennebene ermöglicht.

Nach dem erfindungsgemäßen Verfahren wird nun der Verschluß 12 in einer Ausführung hergestellt, in dem die vertikal angeordnete Spritzeinheit dazu dient, den ersten Stoff aus Hartpolyethylen seitlich in die Trennebene einzuspritzen. Dies ist in der einzigen Figur durch einen Tunnelanschnitt 10 kenntlich gemacht.

In der Phase der Herstellung des Verschlusses 12 durch die seitliche Einspritzung durch den Tunnelanschnitt 10 ist ein als Werkzeug dienender Spritzkern 11 so eingestellt, daß ein durch das Werkzeug gebildetes Formnest vollständig durch den ersten Stoff Hartpolyethylen ausgefüllt wird. Damit ist der eigentliche Verschluß 12 fertiggestellt.

Nun wird im nächsten Schritt der Spritzkern 11 um einen vorbestimmten Betrag von dem gerade fertiggestellten Verschluß zurückgezogen bzw. durchgedreht wobei selbstverständlich unerheblich ist, ob der Spritzkern 11 oder aber der Verschluß 12 die Bewegung ausführen.

Der zwischen dem Verschluß 12 und dem Spritzkern 11 entstandene Zwischenraum 13 wird nun vollständig mit dem zweiten Stoff Weichpolyethylen ausgespritzt. Hierzu dient im Ausführungsbeispiel ein Mittenanguß 14, welcher an die horizontal liegende Spritzeinheit angeschlossen ist. Theoretisch könnte der Anguß für den zweiten Stoff an beliebiger geeigneter Stelle stattfinden, die Verwendung des Mittenangusses 14 jedoch, wie er bei den genannten Maschinen vorgesehen ist, führt dazu, daß die durch den zweiten Spritzvorgang erzeugte Dichtung 15 noch inniger mit dem Verschluß verbunden ist. Dies hat den Vorteil, daß der Verschluß auch bei Gebrauch, also häufiges Auf- und Zudrehen um der Flasche ihren Inhalt ganz oder teilweise zu entnehmen, mit dem Verschluß verbunden bleibt.

Das verwendete Zwei-Stoffe-Spritzgießen macht es schließlich möglich, z. B. durch entsprechende Spritzkernformung die erzeugte Dichtung 15 auf die individuell zu verschließende Flasche abzustimmen. Insbesondere füllt der zweite Stoff vorhandene Ecken und Radien vollständig.

Das relative Zurückbewegen des Spritzkerns 11 kann letztlich auf beliebige Weise geschehen. So kann dieser beispielsweise um einen vorgegebenen Betrag, der in der Regel etwa einen halben bis einen Millimeter betragen wird, aus dem Verschluß zurückgeschraubt werden. Dasselbe kann auch mit dem Verschluß selbst geschehen. Entscheidend ist lediglich, daß durch simple lineare Bewegung, d. h. unter Vermeidung von Schwenken von Werkzeugen der Raum für das Einbringen des zweiten Stoffes geschaffen wird.

Ausformen und Ausstoßen des schließlich mit Dichtung 15 vollständig hergestellten Verschlusses 12 erfolgt in bekannter Weise und braucht daher hier nicht näher dargestellt zu werden.

## Patentansprüche

1. Verfahren zur Herstellung eines gasdichten Kunststoffverschlusses für Flaschen unter Verwendung des Zwei-Stoffe-Spritzgießens, dadurch gekennzeichnet, daß der Verschlußkörper (12) des Kunststoffverschlusses (12,13) durch das Spritzen des ersten Stoffes hergestellt und durch das Spritzen des zweiten Stoffes innen mit einer Dichtungsschicht (13) versehen wird, indem
   - der erste Stoff in eine Trennebene eingespritzt wird,
   - der Spritzkern (11) und der entstandene Verschlußkörper (12) axial um einen bestimmten Betrag voneinander entfernt werden und
   - in den entstandenen Zwischenraum (13) der zweite Stoff in axialer Richtung (14) durch den Verschlußkörper (12) eingespritzt wird.

2. Verfahren nach Anspruch 1, dadurch gekennzeichnet, daß der zweite Stoff durch die Verschlußmitte eingespritzt wird.

3. Verfahren nach Anspruch 1 und/oder 2, dadurch gekennzeichnet, daß der erste Stoff Hartpolyethylen ist und der zweite Stoff Weichpolyethylen.

## Claims

1. Method for producing an air-tight plastic closure for bottles by making use of two-component injection molding known per se, characterized in that
   the closure body (12) of the plastic closure (12,13) is made by injection of the first substance and is provided with a flat seal (13) on the inside by injection of the second substance, wherein
   - the first substance is injected into a separation plane (10),
   - the injection core (11) is drawn back axially by a certain amount from the closure body (12) just made and
   - the second substance is injected in axial direction through the closure body (12) into the created intermediate space (13).

2. Method according to claim 1, characterized in that the second substance is injected through the center of the closure.

3. Method according to claim 1 and/or 2, characterized in that the first substance is hard polyethylene and the second substance is soft polyethylene.

## Revendications

1. Procédé de fabrication d'une fermeture pour bouteilles en matière plastique, étanche aux gaz, en utilisant la méthode de moulage par injection binaire,

   caractérisé en ce que le bouchon (12) de la fermeture (12,13) est réalisé par injection d'une première matière et muni d'un anneau d'étanchéité (13) par injection d'une deuxième matière en
   - coulant par injection la première matière en un plan de joint (10),
   - éloignant axialement le piston d'injection (11) et le bouchon réalisé (12) d'un certain espace (intervalle) et
- en injectant axialement la deuxième matière dans cet intervalle intermédiaire (13) à travers le bouchon (12).

2. Procédé selon revendication 1, caractérisé en ce que la deuxième matière est injectée à travers le centre de la fermeture.

3. Procédé selon revendication 1 et/ou revendication 2, caractérisé en ce que la première matière est en HD-PE (polyéthylène dur) et la deuxième matière est en LD-PE (polyéthylène tendre).

_Fig._